# EUROPEAN PATENT APPLICATION

(11) **EP 4 029 384 A1**
(43) Date of publication of application: **20.07.2022**
(21) Application number: 20876772.3
(22) Date of filing: 16.10.2020
(51) Int. Cl.: A23L 23/00, A23L 27/00, A23L 27/40

(54) **SALTY TASTE ENHANCER**

(30) Priority: 18.10.2019 JP 2019191473
(71) Applicant: TableMark Co., Ltd., Tokyo 104-0045 (JP)
(72) Inventor: MATSUFUJI, Hisashi, Yokohama-shi, Kanagawa 222-0032 (JP); SATO, Masumi, Yokohama-shi, Kanagawa 222-0032 (JP); SUZUKI, Fumi, Yokohama-shi, Kanagawa 222-0032 (JP); IWAMOTO, Erina, Yokohama-shi, Kanagawa 222-0032 (JP); SANO, Hiroyuki, Tokyo 144-0042 (JP); MATSUI, Mayuka, Tokyo 144-0042 (JP)
(74) Representative: Isarpatent
(86) International application number: PCT/JP2020/039147
(87) International publication number: WO 2021/075560

(57) **Abstract**

An object of the present invention is to provide a novel method for enhancing salty taste. The present invention provides a salty taste-enhancing agent for use in a food containing salt, which contains adenylic acid or a salt thereof acceptable for foods, and an organic acid selected from the group consisting of succinic acid, citric acid, acetic acid, tartaric acid, and malic acid or a salt thereof acceptable for foods.

## Description

### Technical Field

The present invention relates to a method for enhancing salty taste of foods using adenylic acid or a salt thereof acceptable for foods, and an organic acid such as succinic acid or a salt thereof acceptable for foods as active ingredients. The present invention is useful in the field of food production and so forth.

### Background Art

In the context of the spread of health consciousness in recent years, there is a growing social need for salt reduction. Therefore, methods for enhancing salty taste while keeping salt (sodium chloride) content low have been examined.

For example, Patent document 1 proposes a method for enhancing salty taste of a food or beverage, which is characterized by adding an acidic amino acid, basic amino acid, and succinic acid or a salt thereof to a food or beverage containing salt. This patent document describes that, as the acidic amino acid, aspartic acid, glutamic acid, and so forth can be mentioned, and aspartic acid is preferably used, and that, as the basic amino acid, arginine, lysine, histidine, ornithine, and so forth can be mentioned, and arginine is preferably used. Patent document 2 proposes, as a composition containing a bitterness suppressor that reduces bitterness of KCl, which is used in foods and beverages as a substitute for sodium chloride, a composition containing (a) potassium chloride in an amount effective for producing a bitter taste and a salty taste, (b) taurine or a physiologically acceptable salt thereof, and (c) 5'-nucleotide monophosphate, which may be 5'- adenosinic acid (AMP), 5'-inosinic acid (IMP), or a physiologically acceptable salt thereof, which composition may be a food or beverage, and wherein the taurine and 5'-nucleotide monophosphate are present in amounts effective for reducing bitterness of the potassium chloride, and the composition is not a seafood, nor an extract of a seafood. Further, Patent document 3 proposes, as a flavor seasoning composition containing a substitute for salt reduction that can reduce amount of salt used for flavoring a food, a composition containing (a) a seasoning mixture containing a flavoring agent, and (b) a salt substitute, wherein the salt substitute contains potassium chloride, taurine or a physiologically acceptable salt thereof, and a 5'-nucleotide monophosphate, which may be 5'- adenosinic acid (AMP), 5'-inosinic acid (IMP), or a physiologically acceptable salt thereof.

Patent document 4 proposes a method for enhancing a salt-like taste of a food or beverage, which is characterized by mixing 2 to 90 parts by weight of a 5'-ribonucleotide and 0.05 to 9 parts by weight of a branched-chain amino acid in 100 parts by weight of salt contained in the food or beverage. In this document, it is explained that the salt-like taste is a kind of aftertaste that is qualitatively similar to salty taste, but has a taste curve showing the maximum value of taste in the latter half thereof. In the examples, disodium 5'-inosinate and disodium 5'-guanylate were used as the 5'-ribonucleotide. Patent document 5 proposes a salt-reduced soy sauce containing the following ingredients (A) to (C): (A) 9 mass % or less of salt, (B) 1 to 4.2 mass % of potassium, and (C) 0.01 to 1.5 mass % in terms of free succinic acid of succinic acid or an alkali metal salt thereof, and/or 0.01 to 1.5 mass % in terms of free malic acid of malic acid or an alkali metal salt thereof. Patent document 6 proposes a liquid seasoning containing the following ingredients (A) to (D): (A) 9 mass % or less of salt, (B) 0.5 to 4.2 mass % of potassium, (C) one or more kinds of substances selected from lactic acid or a salt thereof, succinic acid or a salt thereof, malic acid or a salt thereof, an alkali metal salt of phosphoric acid, ammonium chloride, perilla extract, and chili pepper extract, and (D) 0.05 to 10 mass % of one or more kinds of substances selected from a polyphenol, peptide having an angiotensin conversion inhibitory activity, γ-aminobutyric acid, and taurine. Furthermore, Patent document 7 proposes a salt taste-enhancing agent containing an amino-carbonyl reaction product of a peptide having a molecular weight of 1000 to 5000 and a carbonyl compound, and succinic acid or malic acid.

### Prior Art References

### Patent documents

Patent document 1: Japanese Patent Unexamined Publication (Kokai) No. 2002-345430
Patent document 2: International Publication WO2007/002014 (Japanese Patent Unexamined Publication (Kohyo) No. 2008-543332)
Patent document 3: International Publication WO2007/002015 (Japanese Patent Unexamined Publication (Kohyo) No. 2008-543333)
Patent document 4: International Publication WO2008/126678 (Japanese Patent No. 4308316)
Patent document 5: Japanese Patent Unexamined Publication (Kokai) No. 2006-141223 (Japanese Patent No. 4351611)
Patent document 6: Japanese Patent Unexamined Publication (Kokai) No. 2006-141226 (Japanese Patent No. 4319968)
Patent document 7: Japanese Patent Unexamined Publication (Kokai) No. 2015-109858

### Summary of the Invention

### Object to be achieved by the invention

An object of the present invention is to provide a novel method for enhancing salty taste. It would be desirable that there is a method that can be used in a salt-reduced food and enhance salty taste thereof, and can maintain good tastes of the same non-salt reduced food, either.

### Means for achieving the object

The inventors of the present invention focused on succinic acid, which is considered to be an umami ingredient of shellfish, and thought that use thereof in combination with a high nucleic acid content yeast extract containing a lot of adenylic acid would improve umami taste and reduce salt while keeping deliciousness. In addition, when succinic acid was used alone, when the high nucleic acid content yeast extract was used alone, and when succinic acid was used in combination with any other high nucleic acid content yeast extract, salty taste was not enhanced as expected, and therefore they found that salty taste is enhanced by the combination of adenylic acid and succinic acid. They further found that the salty taste-enhancing effect similar to that obtainable with succinic acid can also be obtained even with a combination of adenylic acid and an organic acid other than succinic acid. The inventors of the present invention accomplished the present invention on the basis of these findings.

The present invention provides the followings.
[1] A salty taste-enhancing agent for use in a food containing salt, which contains:
   adenylic acid or a salt thereof acceptable for foods, and
   an organic acid selected from the group consisting of succinic acid, citric acid, acetic acid, tartaric acid, and malic acid, or a salt thereof acceptable for foods.
[2] The agent according to 1, which is for use of adenylic acid or a salt thereof acceptable for foods at a concentration of 0.0000026 to 0.026% in the food.
[3] The agent according to 1 or 2, which is for such use of adenylic acid or a salt thereof acceptable for foods that mass ratio of salt and adenylic acid or a salt thereof acceptable for foods (mass of salt:mass of adenylic acid or a salt thereof acceptable for foods) is 1:0.0000031 to 0.031 in the food.
[4] The agent according to any one of 1 to 3, which is for use of the organic acid or a salt thereof acceptable for foods at a concentration of 0.000021 to 0.21% in the food.
[5] The agent according to any one of 1 to 4, which is for such use of the organic acid or a salt thereof acceptable for foods that mass ratio of salt and the organic acid or a salt thereof acceptable for foods (mass of salt:mass of the organic acid or a salt thereof acceptable for foods) is 1:0.000025 to 0.25 in the food.
[6] The agent according to any one of 1 to 5, wherein mass ratio of adenylic acid or a salt thereof acceptable for foods and the organic acid or a salt thereof acceptable for foods (mass of adenylic acid or a salt thereof acceptable for foods:mass of the organic acid or a salt thereof acceptable for foods) is 1:0.7 to 1:20.
[7] The agent according to any one of 1 to 6, wherein the organic acid or a salt thereof acceptable for foods is succinic acid or a salt thereof acceptable for foods.
[8] The agent according to any one of 1 to 7, wherein at least one of adenylic acid and the organic acid is contained as a yeast extract.
[9] The agent according to any one of 1 to 8, which is for use in a food containing 0.60 to 0.90% of salt.
[10] The agent according to any one of 1 to 8, wherein the food is a food in the form of liquid.
[11] A method for enhancing salty taste in a food containing salt, which comprises the following step:
   the step of adding
   adenylic acid or a salt thereof acceptable for foods, and
   an organic acid selected from the group consisting of succinic acid, citric acid, acetic acid, tartaric acid, and malic acid, or a salt thereof acceptable for foods
   to a raw material containing salt.
[12] The method according to 11, wherein adenylic acid or a salt thereof acceptable for foods is added to the food at a concentration of 0.0000026 to 0.026% in the food.
[13] The method according to 11 or 12, wherein adenylic acid or a salt thereof acceptable for foods is added so that mass ratio of salt and adenylic acid or a salt thereof acceptable for foods (mass of salt:mass of adenylic acid or a salt thereof acceptable for foods) is 1:0.0000031 to 0.031 in the food.
[14] The method according to any one of 11 to 13, wherein the organic acid or a salt thereof acceptable for foods is added at a concentration of 0.000021 to 0.21% in the food.
[15] The method according to any one of 11 to 14, wherein the organic acid or a salt thereof acceptable for foods is added so that mass ratio of salt and the organic acid or a salt thereof acceptable for foods (mass of salt:mass of the organic acid or a salt thereof acceptable for foods) is 1:0.000025 to 0.25 in the food.
[16] The method according to any one of 11 to 15, wherein adenylic acid or a salt thereof acceptable for foods and the organic acid or a salt thereof acceptable for foods are added so that mass ratio of adenylic acid or a salt thereof acceptable for foods and the organic acid or a salt thereof acceptable for foods (mass of adenylic acid or a salt thereof acceptable for foods:mass of the organic acid or a salt thereof acceptable for foods) is 1:0.7 to 1:20.
[17] The method according to any one of 11 to 16, wherein the organic acid or a salt thereof acceptable for foods is succinic acid or a salt thereof acceptable for foods.
[18] The method according to any one of 11 to 17, wherein at least one of adenylic acid and the organic acid is added as a yeast extract.
[19] The method according to any one of 11 to 18, wherein the food containing salt is a food containing 0.60 to 0.90% of salt.
[20] The method according to any one of 11 to 18, wherein the food is a food in the form of liquid.

### Modes for Carrying out the Invention

The values of % and part are values based on mass, unless especially mentioned. The numerical range "X to Y" includes the values of X and Y at both ends of the range, unless especially noted. The expression "A and/or B" refers to the presence of at least one of A and B, and includes cases where both A and B are present, unless especially stated. The food includes not only those in the form of solid, but also orally ingestible foods in the form of liquid such as beverages and soups. The food includes not only those in a form that can be eaten as it is (for example, a variety of ready-to-eat foods, supplements, and drinks), but also food additives, seasoning compositions, and beverage concentrates. Furthermore, the food includes not only those for humans, but also those for non-human animals (pets, livestock, etc.). The food includes general foods (including so-called health foods), as well as health functional foods (including foods with functional claims, foods with nutrient function claims, and foods for specified health uses).

### [Salty taste-enhancing agent and salty taste-enhancing method]

The present invention relates to a salty taste-enhancing agent for use in a food containing salt, comprising the followings as active ingredients, and a method for enhancing salty taste in a food containing salt using the followings:
adenylic acid or a salt thereof acceptable for foods, and
an organic acid selected from the group consisting of succinic acid, citric acid, acetic acid, tartaric acid, and malic acid, or a salt thereof acceptable for foods.

### <Adenylic acid or a salt thereof acceptable for foods>

Adenylic acid is used in the agent and method of the present invention. Adenylic acid is also called adenosine monophosphate (AMP). There are three kinds of structural isomers of adenylic acid including 2'-, 3'-, and 5'-isomers depending on the binding position of the phosphate moiety. In the present invention, the term "adenylic acid" refers to 5'-adenylic acid, unless especially stated.

It is known that adenylic acid itself has almost no taste, but is converted to inosine monophosphate (IMP) by the action of enzymes such as deaminase, and exhibits taste. It is also known that it is used together with guanylic acid (guanosine monophosphate, GMP) to enhance mushroom flavor (International Publication WO2018/131225).

The salts acceptable for foods mentioned for the present invention include alkali metal salts (e.g., sodium salts, potassium salts etc.), alkaline earth metal salts (e.g., magnesium salts, calcium salts etc.), ammonium salts, and mono-, di-, or tri-lower (alkyl or hydroxyalkyl)ammonium salts (e.g., ethanol ammonium salts, diethanol ammonium salts, triethanol ammonium salts, tromethamine salts etc.), unless especially stated. The salts may be an anhydride or solvate acceptable for foods, and examples of the solvate include hydrates and ethanolates. Adenylic acid used in the present invention is preferably disodium salt, because it shows relatively high solubility in water and is easily available. The disodium salt of adenylic acid is also referred to as disodium adenosine 5'-phosphate, disodium 5'-adenylate, 5'-AMP disodium salt, 2 sodium adenosine 5'-phosphate, disodium AMP, AMP disodium salt, disodium 5'-AMP, AMP disodium, disodium adenosine-5'-phosphate, disodium adenosine 5'-phosphate, 5'-adenylic acid disodium salt, adenosine 5'-monophosphate disodium salt, or adenosine 5'-monophosphate 2 sodium salt.

Adenylic acid or a salt thereof acceptable for foods for use in the present invention may be in the form of a yeast extract. High nucleic acid content yeast extracts containing a lot of adenylic acid are commercially available. Examples of commercially available yeast extracts containing a lot of adenylic acid include Himax AG (manufactured by Fuji Foods Corporation.), and so forth.

According to the study of the inventors of the present invention, when an inosinic acid salt was used at a concentration of 0.00053% or 0.000106 % instead of adenylic acid salt in combination with a salt of organic acids described below in 0.7% saline solution, umami taste of inosinic acid was felt in the both cases, but salt taste-enhancing effect was not observed, and therefore it was considered that inosinic acid is not involved in the salty taste-enhancing effect.

### <Organic acid or a salt thereof acceptable for foods>

An organic acid selected from the group consisting of succinic acid, citric acid, acetic acid, tartaric acid, and malic acid is used in the agent and method of the present invention. Succinic acid, citric acid, acetic acid, tartaric acid, and malic acid all have a sour taste. Tartaric acid can be L-isomer, D-isomer, meso isomer, or racemate, but it is preferable to use L-isomer, D-isomer, or meso isomer, because it dissolves well in water. Malic acid can be L-isomer, D-isomer, or racemate, and the most commonly used racemate (a mixture of equal amounts of D-isomer and L-isomer, sometimes called DL-isomer) may be used. For the present invention, the organic acid selected from the group consisting of succinic acid, citric acid, acetic acid, tartaric acid, and malic acid may also be referred to simply as organic acid.

Preferred examples of the organic acid or a salt thereof for use in the present invention are succinic acid or a salt thereof, tartaric acid or a salt thereof, and malic acid or a salt thereof, a more preferred example is succinic acid or a salt thereof, and a still more preferred example is sodium salt of succinic acid. This is because the sodium salt has a milder taste compared with the free form of the acid.

The organic acid or a salt thereof acceptable for foods used in the present invention may be in the form of yeast extract. Yeast extracts containing a lot of, for example, succinic acid among the organic acids are commercially available. Examples of commercially available yeast extracts of high succinic acid content include Himax SA (Fuji Foods Corporation), and so forth.

### <Amount and ratio to be used>

In the agent or method of the present invention, adenylic acid or a salt thereof acceptable for foods is used. It is preferably used at a concentration of 0.0000026 to 0.026% in a food, more preferably 0.000026 to 0.0026% in a food. In the agent or method of the present invention, adenylic acid or a salt thereof acceptable for foods is preferably used so that the mass ratio of salt and adenylic acid or a salt thereof acceptable for foods (mass of salt:mass of adenylic acid or a salt thereof acceptable for foods) is 1:0.0000031 to 0.031, more preferably 1:0.000031 to 0.0031, in a food. This is because the salty taste-enhancing effect can be fully exerted when adenylic acid or a salt thereof acceptable for foods is used in such a range in combination with succinic acid or a salt thereof.

Concerning the present invention, the mass or concentration of adenylic acid or a salt thereof acceptable for foods in a food is represented as a value of mass or concentration in terms of adenylic acid disodium salt, unless especially stated. The mass or concentration of adenylic acid or a salt thereof acceptable for foods in terms of adenylic acid disodium salt means a mass or concentration of adenylic acid disodium salt in a molar amount equivalent to that of adenylic acid or a salt thereof acceptable for foods. Adenylic acid or a salt thereof acceptable for foods in a food can be measured by high performance liquid chromatography (HPLC) analysis or other methods.

When adenylic acid or a salt thereof acceptable for foods is used in the form of yeast extract in the agent or method of the present invention, the yeast extract is preferably used at a concentration of 0.000035 to 0.35% in a food, more preferably 0.00035 to 0.035% in a food, in terms of solid content.

In the agent or method of the present invention, an organic acid or a salt thereof acceptable for foods is used. The organic acid or a salt thereof acceptable for foods is preferably used at a concentration of 0.000021% to 0.21% in a food, more preferably 0.00021% to 0.021% in a food. In the agent or method of the present invention, it is preferable to use the organic acid or a salt thereof acceptable for foods so that the mass ratio of salt and the organic acid or a salt thereof acceptable for foods (mass of salt:mass of the organic acid or a salt thereof acceptable for foods in terms of sodium salt) is 1:0.000025 to 0.25, more preferably 1:0.00025 to 0.025. This is because if the organic acid or a salt thereof acceptable for foods is used in such a range in combination with adenylic acid or a salt thereof, the salty taste-enhancing effect is sufficiently exerted, and the taste of the organic acid is not imparted to the food.

Concerning the present invention, mass or concentration of the organic acid or a salt thereof acceptable for foods in a food is represented with a value of mass or concentration in terms of sodium salt, unless especially stated. The expression that mass or concentration of the organic acid or a salt thereof acceptable for foods in a food is represented with a value of mass or concentration in terms of sodium salt means that the mass or concentration is represented by mass or concentration of equimolar amount of sodium salt of the organic acid. Various organic acids or salt thereof acceptable for foods contained in foods can be measured by high performance liquid chromatography (HPLC), gas chromatography (GC), or other methods.

In a particularly preferred embodiment of the present invention, adenylic acid or a salt thereof acceptable for foods and an organic acid or a salt thereof acceptable for foods are used in a mass ratio thereof (mass of adenylic acid or a salt thereof acceptable for foods in terms of disodium adenylate:mass of organic acid or a salt thereof acceptable for foods in terms of disodium salt of the organic acid) of 1:0.7 to 1:20, preferably 1:1 to 1:5. This is because when they are used at a ratio in such a range in combination with succinic acid or a salt thereof, the salty taste-enhancing effect is sufficiently exerted.

### [Uses]

### <Enhancement of salty taste>

The agent or method of the present invention is for enhancing salty taste of salt in foods. In general, one of the characteristics of salty taste of salt is that it is felt as a sharp initial taste. According to the study of the inventors of the present invention, organic acids and salts thereof have a salt-like taste characteristic to organic acids, and this taste is felt a little later than the salty taste of salt (middle taste). However, when adenylic acid or a salt thereof is used in combination, the salty taste comes to be felt immediately after a food is put into the mouth (initial taste), and it is felt like the salty taste of the food as a whole is sufficiently enhanced. Therefore, the present invention provides an agent or method for enhancing salty taste felt immediately after a food is put into the mouth (more specifically, salty taste of salt), which uses adenylic acid or a salt thereof acceptable for foods in combination with an organic acid or a salt thereof acceptable for foods.

### <Evaluation method and standards>

Whether salty taste is enhanced or not can be evaluated by those skilled in the art by planning a sensory test using an appropriate control as a standard. More specifically, for example, a sample of a normal salt concentration not containing any active ingredient and/or a sample of a reduced salt concentration compared with normal salt concentration can be prepared as a standard, and an objective food can be evaluated by panelists consisting of experts through comparison with the standard. When the panelists consist of a plurality of persons, the evaluators can agree on how to make a judgment in each case prior to the evaluation.

As a more specific method for the evaluation, the method described in the section of Examples of this description can be referred to.

As for enhancement of salty taste, evaluation can be performed by preparing standard saline solutions with graded concentrations (e.g., 0.7%, 0.75%, 0.8%, and 0.9% saline solutions) and making the panelists compare an object with the standard saline solutions and present the concentration of the standard saline solution that presents the same level of salty taste as that of the object.

### <Applicable foods>

The agent and method of the present invention can be applied to a variety of foods. Preferred examples of foods to which they can be applied are foods containing salt and exhibiting the salty taste of salt, and such foods as mentioned of which salt content has been reduced.

Although the concentration of salt that tastes good varies from food to food, and depending on the presence of other tastes in the food, the agent or method of the present invention can be applied to any food that contains salt. One class of the particularly preferred ones consists of various foods or seasonings in the form of liquid or containing a certain amount of water, such as soups or soup ingredients (e.g., those that are solids to be blended with other ingredients and dissolved in hot water, broth, etc. to prepare soups). Specific examples of soups include seafood soup, consomme soup, onion soup, beef bouillon soup, chicken soup, brown soup, chicken broth, pork bone soup, corn soup, tomato soup, bouillabaisse, aquapazza, vichyssoise, chowder, clam chowder, chili con came, gumbo, Zwiebel zuppe, eintopf, goulash, goulache, minestrone, gazpacho, fondue, borscht, Japanese miso soup, Japanese clear soup, kasu-jiru (Japanese sake lees soup), zoni (Japanese soup containing rice cakes, vegetables and other ingredients), ushio-jiru (Japanese thin soup made by boiling fish or shellfish in seawater), pork soup, sampei-jiru (Japanese local soup with salted fish, various vegetables, and sake lees), kenchin-jiru (Japanese vegetable chowder), noppei-jiru (Japanese traditional thickened stew generally made from left-over vegetable parts, sauteed in sesame oil and boiled), goat soup, bone soup, samgyetang, posintang, solrontang, gamjatang, jige soup, suratan (Chinese hot and sour soup), tom yum kung, ramen soup, udon (Japanese wheat flour noodles) soup, soba (Japanese buckwheat noodles) soup, and so forth. Other examples of various foods or seasonings in the form of liquid or containing a certain amount of water are beef stew, white stew, tomato stew, men-tsuyu (Japanese soup for noodles, concentrated or straight), tempura sauce, miso, doubanjiang, various Japanese arranged sauces (Worcester, tonkatsu, chuno etc.), soy sauce (light and dark), oyster sauce, curry roux, hashed beef roux, neri wasabi (wasabi paste), neri garashi (mustard paste), tomato ketchup, mayonnaise, dressing, chili sauce, chili pepper sauce, tomato sauce, pizza sauce, butter, margarine, corn soup base, chicken soup base, marbo tofu base, and so forth. The foods to which the present invention is applied may be various processed foods (including chilled or frozen foods), and examples thereof include spring rolls, Chinese rice bowls (fillings), gyoza (Chinese dumplings), shaomai (Chinese sizzling dumplings), xiao long bao, meat buns, Chinese chop suey, hui guo rou (Chinese twice-cooked pork), qing jiao rou si (Chinese stir-fried shredded beef and green pepper), stir-fried vegetables, kinpira (Japanese chopped vegetables cooked in soy sauce and sugar), Chikuzen-ni (Japanese local stewed food with various processed vegetables and chicken fried and boiled with soy sauce), as well as fried products such as croquette, fried cake of minced meat, and shrimp cutlet, meat products such as hamburger steak, noodle products such as ankake udon (Japanese wheat flour noodles with a dressing thickened with starch), Nagasaki champon (Japanese local Chinese-style noodles), fried noodles, spaghetti Napolitana, macaroni au gratin, and lasagna, rice products such as fried rice, pilaf, takikomigohan (Japanese cooked rice seasoned with soy sauce and boiled with meat or seafood, and other vegetables), and chirashi sushi (kind of sushi, vinegared rice topped with ingredients such as seafood), and flour products such as okonomiyaki (Japanese-style fried pancake containing vegetables and other ingredients), takoyaki (Japanese ball-shaped pancake containing small pieces of octopus), and pizza.

According to the study of the inventors of the present invention, the agent or method of the present invention is particularly suitable for cases of reducing salt by 5 to 45% in foods whose salt concentration at the time of consumption is usually 0.50 to 3.5%. The percentage of salt reduction is represented as the percentage of salt reduced from a salt concentration of the food for which no special measures are taken to reduce salt, which is taken as 100%, unless especially stated. For example, if salt of a food usually with a salt concentration of 1.0% is reduced to a salt concentration of 0.7%, it can be said that the salt is reduced by 30%.

### <Agent and composition>

The agent of the present invention may consist only of the active ingredients, adenylic acid or a salt thereof acceptable for foods, and an organic acid selected from the group consisting of succinic acid, citric acid, acetic acid, tartaric acid, and malic acid or a salt thereof acceptable for foods, or may contain other ingredients so long as the active ingredient can exert the objective effect. The other ingredients can be various additives acceptable for foods. Examples include antioxidants, flavors, seasonings, sweeteners, colorants, thickening stabilizers, color developers, bleaching agents, antifungal agents, gum bases, bittering agents etc., enzymes, brighteners, acidulants, emulsifiers, fortifiers, manufacturing agents, excipients, binders, tensifying agents (isotonic agents), buffers, dissolution aids, preservatives, stabilizers, coagulants, and so forth. The amount of the active ingredients in the agent is, for example, from 1 to 100%, and may be 10 to 80%, or 20 to 60%.

### [Production method]

The agent of the present invention can be produced by existing methods.

### [Others]

One aspect of the present invention is a method for producing a salt-reduced food, which comprises the step of adding effective amounts of the active ingredients explained above to a raw material. The stage of the addition of the active ingredients in the method for producing a food can be appropriately determined in consideration of workability and other factors.

### Examples

### [Example 1]

Salty taste-enhancing effects of each or combinations of succinic acid (disodium succinate, also referred to as 2Na succinate), adenylic acid (5'-adenylic acid disodium salt, also referred to as Na adenylate), and inosinic acid (also referred to as Na inosinate) were confirmed. In detail, salty taste-enhancing effects of the following samples were examined. In the following examples, as succinic acid and adenylic acid, the aforementioned materials were used, unless especially stated.

Sample 1: 1% Saline solution
Sample 2: 0.7% Saline solution (30% salt reduced)
Sample 3: 2Na succinate (MC Food Specialties Inc.)
Sample 4: Na adenylate (Oriental Yeast Industry Co., Ltd.)
Sample 5: Na inosinate (MC Food Specialties Inc.)
Sample 6: 2Na succinate + Na adenylate
Sample 7: 2Na succinate + Na inosinate

The amounts of sodium contained in the materials were 39250 mg/100 g for salt (fine salt), 17000 mg/100 g for 2Na succinate, and 9400 mg/100 g for Na adenylate. The samples were prepared by using 2Na succinate and Na adenylate in the compositions mentioned in the following table, and therefore the amounts of sodium contained in 2Na succinate and Na adenylate were very small, which are considered to almost not affect the salty taste.

The samples were prepared according to the compositions shown in the table mentioned below and stored overnight in a refrigerator. On the next day, the samples were taken out from the refrigerator and left at room temperature for one hour, and then sensory evaluation was performed. The sensory evaluation was performed by four trained panelists. The intensity of salty taste of the sample 1 (1% saline solution) was defined to be 1.0, the intensity of salty taste of the sample 2 (0.7% saline solution) was defined to be 0.7, and the intensities of salty taste of the samples 3 to 7 compared with that of the sample 2 were evaluated as consensus of all the four panelists.

**[Table 1]**

| (%) | | | | | | | |
|---|---|---|---|---|---|---|---|
| Sample | 1 (1 % saline solution) | 2 (0.7% saline solution) | 3 | 4 | 5 | 6 | 7 |
| Salt | 1 | 0.7 | 0.7 | 0.7 | 0.7 | 0.7 | 0.7 |
| 2Na succinate | - | - | 0.0026 | - | - | 0.0026 | 0.0026 |
| Na adenylate | - | - | - | 0.00053 | - | 0.00053 | - |
| Na inosinate | - | - | - | - | 0.00053 | - | 0.00053 |
| Water | 99 | 99.3 | 99.2974 | 99.2995 | 99.2995 | 99.2969 | 99.2969 |
| Total | 100 | 100 | 100 | 100 | 100 | 100 | 100 |
| Na (mg/100 g) | 393 | 275 | 275 | 275 | 275 | 275 | 275 |
| Salt equivalent amount (%) | 1.00 | 0.70 | 0.70 | 0.70 | 0.70 | 0.70 | 0.70 |
| Intensity of salty taste | 1 | 0.7 | 0.75 | 0.7 | 0.7 | 0.85 | 0.7 |
| Comments for sensory evaluation | Salty taste was strongly felt. | Salty taste was felt, but it was a bit lacking. | Salty taste was felt. Salt-like taste was felt slowly. | Salty taste was not increased compared with Sample 2. | Salty taste was not increased compared with Sample 2. Umami was strong. | Salty taste was more strongly felt compared with Sample 2. Salty taste was felt immediately after the sample was put into the mouth, and sustained. | Salty taste was not increased compared with Sample 2. Umami was strong. |

When each of 2Na succinate, Na adenylate, and Na inosinate was added to the 0.7% saline solution, the addition of 2Na succinate enhanced the salty taste (Sample 3). On the other hand, the addition of Na adenylate or Na inosinate alone had no salty taste-enhancing effect (Samples 4 and 5). When 2Na succinate was combined with Na adenylate, salty taste was enhanced compared with the addition of 2Na succinate alone (Sample 6). In particular, the salty taste was strongly fest immediately after putting the sample into the mouth. When Na inosinate was combined with 2Na succinate, no salty taste-enhancing effect was observed (Sample 7). Umami was strengthened, and perception of salty taste was suppressed compared with the addition of 2Na succinate alone.

### [Example 2: Examination of other organic acids]

The salty taste-enhancing effects of organic acid Na salts other than 2Na succinate were confirmed. More precisely, the salty taste-enhancing effects of the following samples were confirmed.

Sample A: 1% Saline solution
Sample B: 0.7% Saline solution (30% salt reduced)
Sample C: Trisodium citrate (3Na citrate, Fuso Chemical Industries, Ltd.)
Sample D: 3Na citrate + Na adenylate
Sample E: Sodium acetate (Na acetate, Mitsubishi Chemical Co., Ltd.)
Sample F: Na acetate + Na adenylate
Sample G: Sodium L-tartrate (Na L-tartrate, Showa Kako Co., Ltd.)
Sample H: Na L-Tartrate + Na adenylate
Sample I: Na DL-malate 1/2 hydrate (Sodium DL-malate 1/2 hydrate, Fuso Chemical Industries, Ltd.)
Sample J: Na DL-malate 1/2 hydrate + Na adenylate

The samples were prepared in the same manner as in Example 1 and used for sensory evaluation. The sensory evaluation was conducted by four trained panelists. The salty taste intensity of the sample A (1% saline solution) was defined as 1.0, the salty taste intensity of the sample B (0.7% saline solution) was defined as 0.7, and the salty taste intensities of the samples C to J compared with the sample B were evaluated.

**[Table 2]**

| (%) | | | | | | | | | | |
|---|---|---|---|---|---|---|---|---|---|---|
| Sample | A | B | C | D | E | F | G | H | I | J |
| Salt | 1 | 0.7 | 0.7 | 0.7 | 0.7 | 0.7 | 0.7 | 0.7 | 0.7 | 0.7 |
| 3Na citrate | - | - | 0.0026 | 0.0026 | - | - | - | - | - | - |
| Na acetate | - | - | - | - | 0.0026 | 0.0026 | - | - | - | - |
| Na L-tartrate | - | - | - | - | - | - | 0.0026 | 0.0026 | - | - |
| Na DL-malate | - | - | - | - | - | - | - | - | 0.0026 | 0.0026 |
| Na adenylate | - | - | - | 0.00053 | - | 0.00053 | - | 0.00053 | - | 0.00053 |
| Water | 99 | 99.3 | 99.2974 | 99.29687 | 99.2974 | 99.29687 | 99.9974 | 99.29687 | 99.2974 | 99.29687 |
| Strength of salty taste | 1 | 0.7 | 0.78 | 0.85 | 0.72 | 0.75 | 0.72 | 0.75 | 0.8 | 0.85 |
| Comments for sensory evaluation | Salty taste was strongly felt. | Salty taste was felt, but it was a bit lacking. | Salt-like taste was enhanced. Salty taste felt immediat ely after putting the sample into the mouth was enhanced. | Enhance ment of salty taste could be definitely confirme d. | Salty taste was not increased. Acridity was introduce d. | Salty taste was slightly enhanced. Salty taste was maintaine d either, and acridity was not felt. | Enhance ment of salty taste was not observed. | Salty taste was slightly enhanced. | Enhance ment of salty taste could be confinne d, but acrid aftertaste was left. | Enhance ment of salty taste could be definitely confirme d, and maintaine d either. Acridity was not felt. |

Addition of each of 3Na citrate, Na acetate, Na L-tartrate, and Na DL-malate to 0.7% saline enhanced the salty taste, (Samples C, E, G, and I). When Na adenylate was combined, Na salts of organic acids other than 2Na succinate also enhanced salty taste (Samples D, F, H, and J). The effect of 3Na citrate or Na DL-malate was comparable to that of 2Na succinate (Samples D and J, and Sample 6 of Example 1).

### [Example 3: Examination of inosinic acid]

In saline base containing combination of 2Na succinate and Na inosinate, strong umami taste of inosinate may inhibit enhancement of salty taste. Therefore, correction for umami taste of Na inosinate was given, and it was confirmed again whether or not the salty taste-enhancing effect was present. More precisely, salty taste-enhancing effects of the following samples were examined.

Sample (1): 1% Saline solution
Sample (2): 0.7% Saline solution (30% salt reduced)
Sample (3): 2Na succinate + Na inosinate
Sample (4): 2Na succinate + Na inosinate in 1/5 amount compared with that of the sample (3)

The samples were prepared in the same manner as in Example 1, and used for sensory evaluation. The sensory evaluation was conducted by four trained panelists. The salty taste intensity of the sample (1) (1% saline solution) was defined as 1.0, the salty taste intensity of the sample (2) (0.7% saline solution) was defined as 0.7, and the salty taste intensities of the samples (3) and (4) compared with the sample (2) were evaluated.

**[Table 3]**

| (%) | | | | |
|---|---|---|---|---|
| Sample | (1% saline solution) | (2) (0.7% saline solution) | (3) | (4) |
| Salt | 1 | 0.7 | 0.7 | 0.7 |
| 2Na succinate | - | - | 0.0026 | 0.0026 |
| Na adenylate | - | - | - | - |
| Na inosinate | - | - | 0.00053 | 0.000106 |
| Water | 99 | 99.3 | 99.2969 | 99.2973 |
| Total | 100 | 100 | 100 | 100 |
| Na (mg/100 g) | 393 | 275 | 275 | 275 |
| Salt equivalent amount (%) | 1.00 | 0.70 | 0.70 | 0.70 |
| Strength of salty taste | 1 | 0.7 | 0.7 | 0.7 |
| Comments for sensory evaluation | Salty taste was strongly felt. | Salty taste was felt, but it was a bit lacking. | Salty taste was not increased compared with the sample (2). Umami was strong. | Salty taste was not enhanced compared with the sample (2). Umami was felt. |

Use of the combination of 2Na succinate and Na inosinate in 0.7% saline solution provided no salty taste-enhancing effect (Sample (3)). Combination of Na inosinate in 1/5 amount also provided no salty taste-enhancing effect, but umami taste was felt (Sample (4)). It was considered that inosinic acid is not involved in the salty taste enhancement, but only in umami taste.

### [Example 4: Use of yeast extract]

Salty taste-enhancing effects of high nucleic acid content yeast extracts and high succinic acid content yeast extracts were examined. More precisely, salty taste-enhancing effects of the following samples were examined.

Sample (1): 1% Saline solution
Sample (2): 0.7% Saline solution (30% salt reduced)
Sample (3): Yeast extract with high succinic acid content (Himax SA, Fuji Foods Corporation.)
Sample (4): Yeast extract with high succinic acid content (Himax SA) + Na adenylate
Sample (5): Yeast extract with high succinic acid content (Himax SA) + Yeast extract with high nucleic acid content (Himax AG, Fuji Foods Corporation.)

The amounts of Na contained in Himax SA and Himax AG are 4200 mg/100g and 7130 mg/100g, respectively. The samples were prepared by using Himax SA and Himax AG in the compositions mentioned in the following table, and therefore the amounts of Na contained in Himax SA and Himax AG were very small, which were considered to be amounts that did not substantially affect the salty taste.

The content of 2Na succinate 6 hydrate in Himax SA is calculated to be 18.4 %. Himax AG is a yeast extract that contains high levels of adenylic acid (AMP) and guanylic acid (GMP). The content of adenylic acid (2Na salt 7 hydrate equivalent amount) in Himax AG is calculated to be 10%.

The samples were prepared in the same manner as in Example 1, and used for sensory evaluation. The sensory evaluation was conducted by four trained panelists. The salty taste intensity of the sample (1) (1% saline solution) was defined as 1.00, the salty taste intensity of the sample (2) (0.7% saline solution) was defined as 0.7, and the samples (3) to (5) were evaluated on the basis of comparison with the sample (2).

**[Table 4]**

| (%) | | | | | |
|---|---|---|---|---|---|
| Sample | (1) (1% Saline solution) | (2) (0.7% Saline solution) | (3) | (4) | (5) |
| Salt | 1 | 0.7 | 0.7 | 0.7 | 0.7 |
| Himax SA | - | - | 0.0141 | 0.0141 | 0.0141 |
| Adenylic acid | - | - | - | 0.00053 | - |
| Himax AG | - | - | - | - | 0.004 |
| Water | 99 | 99.3 | 99.2859 | 99.2854 | 99.2819 |
| Total | 100 | 100 | 100 | 100 | 100 |
| Na (mg/100 g) | 393 | 275 | 275 | 275 | 275 |
| Salt equivalent amount (%) | 1.00 | 0.70 | 0.70 | 0.70 | 0.70 |
| Strength of sally taste | 1 | 0.7 | 0.75 | 0.85 | 0.85 |
| Comments for sensory evaluation | Salty taste was strongly felt. | Salty taste was felt, but it was a bit lacking. | Enhancement of salty taste was slightly confirmed compared with the sample (2). | Enhancement of salty taste was strongly felt compared with the sample (2). It was maintained, either. | Enhancement of salty taste was strongly felt compared with the sample (2). It was maintained, either, and influence of umami was also introduced. |

Addition of the high succinic acid content yeast extract (Himax SA) to 0.7% saline solution enhanced salty taste (Sample (3)). The combination of the succinic acid-containing yeast extract (Himax SA) with adenylic acid further enhanced salty taste compared with the sample (3) (Sample (4)). The combination of succinic acid-containing yeast extract (Himax SA) with high nucleic acid content yeast extract (Himax AG) further enhanced salty taste compared with the sample (3) (Sample (5)). Even when a high succinic acid content yeast extract or high adenylic acid content (high nucleic acid content) yeast extract was used instead of succinic acid or adenylic acid, the salty taste-enhancing effect could also be confirmed.

### [Example 5: Application to foods]

Salty taste-enhancing effect and degree thereof were confirmed in a seafood soup base. More precisely, salty taste-enhancing effects in the following seafood soups were confirmed.

(1): Seafood soup (blank)
(2): 10% Salt reduced seafood soup compared with the sample (1)
(3): 20% Salt reduced seafood soup compared with the sample (1)
(4): 30% Salt reduced seafood soup compared with the sample (1)
(5): Sample (4) + 2Na succinate + Himax AG

A seafood base raw material was prepared according to the composition mentioned in the following table, and then seafood bases were prepared according to the mixing ratios mentioned in the next following table. Then, 1.4 g of each seafood base was dissolved in hot water to prepare 100ml of seafood soup, and sensory evaluation was performed. The sensory evaluation was conducted by trained 4 panelists, who evaluated to determine to which levels of salty tastes of the samples (1) to (4) the salty taste of the sample (5) corresponded. The samples were ranked from the first place to 5th place in the order of strength of salty taste, which was based on the averages of the evaluations of the 4 panelists. The salt concentration of the seafood soup was calculated to be 0.84% (1.4 x 0.611 x 0.661 + 1.4 x 0.1965 = 0.840).

**[Table 5]**

| Seafood base raw material | |
|---|---|
| Materials | Ratio (%) |
| Salt | 61.1 |
| Sodium glutamate | 22.7 |
| Granulated sugar | 10.6 |
| Clam powder | 2.3 |
| Shrimp powder | 2.3 |
| Spices | 0.8 |
| Nucleic acid | 0.3 |
| Total | 100 |

**[Table 6]**

| Seafood base | | | | | (%) |
|---|---|---|---|---|---|
| | (1) | (2) | (3) | (4) | (5) |
| Seafood base raw material | 66.1 | 66.1 | 66.1 | 66.1 | 66.1 |
| Salt | 19.65 | 13.1 | 6.55 | - | - |
| Dextrin | 14.25 | 20.8 | 27.35 | 33.9 | 33.5 |
| 2Na succinate | - | - | - | - | 0.15 |
| Himax AG | - | - | - | - | 0.25 |
| Strength of salty taste (rank) | 1 | 3 | 4 | 5 | 2 |

The strength of salty taste of the sample (5) was between the strengths of the samples (1) and (2), but slightly closer to that of the sample (2). Therefore, it was found that the combination of the ingredients used in the sample (5) had 15 to 20% of salty taste-enhancing effect.

### [Example 6: Investigation of effective amount]

The effective ranges of adenylic acid and succinic acid amounts for salty taste enhancement were confirmed in seafood soup. More precisely, the salty taste-enhancing effect was confirmed in the following seafood soups.

a: Seafood soup (same as the sample (4) used in Example 4)
b: The same as the sample f except that the amount of 2Na succinate + Himax AG was 1/1000
c: The same as the sample f except that the amount of 2Na succinate + Himax AG was 1/100
d: The same as the sample f except that the amount of 2Na succinate + Himax AG was 1/10
e: The same as the sample f except that the amount of 2Na succinate + Himax AG was 1/2
f: The sample a + 2Na succinate + Himax AG (same as the sample (5) used in Example 4)
g: The same as the sample f except that the amount of 2Na succinate + Himax AG was 2 times amount
h: The same as the sample f except that the amount of 2Na succinate + Himax AG was 10 times amount
i: The same as the sample f except that the amount of 2Na succinate + Himax AG was 100 times amount

Seafood bases were prepared according to the compositions mentioned in the following table, and each dissolved with hot water to prepare seafood soups, and sensory evaluation was conducted. The sensory evaluation was conducted by 4 trained panelists, who evaluated whether enhancement of salty taste could be confirmed in the samples b to i compared with the sample a. The composition of the seafood base raw material was the same as that used in Example 5.

**[Table 7]**

| Seafood base | | | | | | | | | (%) |
|---|---|---|---|---|---|---|---|---|---|
| Sample | a | b | c | d | e | f | g | h | I |
| Seafood base raw material | 66.1 | 66.1 | 66.1 | 66.1 | 66.1 | 66.1 | 66.1 | 66.1 | 66.1 |
| Dextrin | 33.5 | 33.5 | 33.5 | 33.5 | 33.7 | 33.5 | 33.1 | 29.9 | - |
| 2Na succinate | - | 0.00015 | 0.0015 | 0.015 | 0.075 | 0.15 | 0.3 | 1.5 | 15 |
| Himax AG | - | 0.00025 | 0.0025 | 0.025 | 0.125 | 0.25 | 0.5 | 2.5 | 25 |

The results are shown in the following table.

**[Table 8]**

| | Comparison with sample a | Comments |
|---|---|---|
| b | x | No salty taste enhancement could be confirmed. |
| c | Δ | Slight enhancement of salty taste-like taste was observed. |
| d | o | Enhancement of salty taste could be confirmed. |
| e | o | Enhancement of salty taste could be confirmed. |
| f | o | Enhancement of salty taste could be definitely confirmed. |
| g | o | Enhancement of salty taste could be definitely confirmed. |
| h | o | Enhancement of salty taste could be definitely confirmed. |
| i | Δ | Enhancement of salty taste-like taste was observed, but umami taste and acridity were also felt. |

| | | |
|---|---|---|
| o: Salty taste was markedly enhanced compared with the sample a. Δ : Salty taste was slightly enhanced compared with the sample a. x : Salty taste similar to that of the sample a. | | |

On the basis of the above results, the effective ranges of the ingredients at the time of eating are determined to be 0.000021 to 0.21% for 2Na succinate, and 0.000035 to 0.35% for Himax AG (0.000002647 to 0.02647% in terms of 2Na adenylate equivalent amount). The effective ranges are preferably 0.00021 to 0.021% for 2Na succinate, and 0.00035 to 0.035% for Himax AG (0.00002647 to 0.002647% in terms of 2Na adenylate equivalent amount). Since 1.4 g of the seafood base was dissolved in hot water to prepare 100 ml of soup, the minimum of 2Na succinate was calculated as 1.4 x 0.0015 (%) (mixing ratio of the succinate in the sample c) = 0.000021 (%), and the maximum of the same was calculated as 1.4 x 15 (%) (mixing ratio of the succinate in the sample i) = 0.21 (%). The minimum of Himax AG was calculated as 1.4 x 0.0025 (%) (mixing ratio of Himax AG in the sample c) = 0.000035, and the maximum of the same was calculated as 1.4 x 25 (%) (mixing ratio of Himax AG in the sample i) = 0.35 (%).

### [Example 7: Examination of ratio]

The salt reduction effect was confirmed for various combination ratios of Na adenylate and 2Na succinate. More precisely, salty taste-enhancing effects of the following samples were confirmed.

α: Na adenylate:2Na succinate = 1:5
β: Na adenylate:2Na succinate = 3:5
γ: Na adenylate:2Na succinate = 1:1
δ: Na adenylate:2Na succinate = 5:1
ε: Na adenylate:2Na succinate = 5:3

Samples were prepared in the same manner as that used in Example 1, and sensory evaluation was conducted. The sensory evaluation was conducted by 4 trained panelists. The samples α to ε were evaluated by comparison with the control (0.7% saline solution).

**[Table 9]**

| | 0.7% saline solution | α | β | γ | δ | ε |
|---|---|---|---|---|---|---|
| Salt | 0.7 | 0.7 | 0.7 | 0.7 | 0.7 | 0.7 |
| Na adenylate | - | 0.0005 | 0.0015 | 0.0025 | 0.0025 | 0.0025 |
| 2Na succinate | - | 0.0025 | 0.0025 | 0.0025 | 0.0005 | 0.0015 |
| Water | 99.3 | 99.2970 | 99.2960 | 99.2950 | 99.2970 | 99.2960 |
| Total | 100 | 100 | 100 | 100 | 100 | 100 |
| Strength of salty taste | Control | o | o | o | x | x |
| Comments for sensory evaluation | Salty taste was felt. but it was a bit lacking. | Salty taste-enhancing effect was observed. | Salty taste-enhancing effect was observed. | Salty taste-enhancing effect was observed. | Salty taste was not enhanced. Umami taste was felt. | Salty taste was not enhanced. Umami taste was felt. |

| | | | | | | |
|---|---|---|---|---|---|---|
| o: Salty taste was enhanced compared with 0.7% saline solution. x: Salty taste was not enhanced compared with 0.7% saline solution. | | | | | | |

As for the combination ratio of 2Na succinate and adenylic acid, the salty taste-enhancing effect was observed in the range of the combination ratio of Na adenylate (adenylic acid disodium salt) and 2Na succinate (disodium succinate) of 1:1 to 1:5.

## Claims

1. A salty taste-enhancing agent for use in a food containing salt, which contains:
adenylic acid or a salt thereof acceptable for foods, and
an organic acid selected from the group consisting of succinic acid, citric acid, acetic acid, tartaric acid, and malic acid, or a salt thereof acceptable for foods.

2. The agent according to claim 1, which is for use of adenylic acid or a salt thereof acceptable for foods at a concentration of 0.0000026 to 0.026% in the food.

3. The agent according to claim 1 or 2, which is for such use of adenylic acid or a salt thereof acceptable for foods that mass ratio of salt and adenylic acid or a salt thereof acceptable for foods (mass of salt:mass of adenylic acid or a salt thereof acceptable for foods) is 1:0.0000031 to 0.031 in the food.

4. The agent according to any one of claims 1 to 3, which is for use of the organic acid or a salt thereof acceptable for foods at a concentration of 0.000021 to 0.21% in the food.

5. The agent according to any one of claims 1 to 4, which is for such use of the organic acid or a salt thereof acceptable for foods that mass ratio of salt and the organic acid or a salt thereof acceptable for foods (mass of salt:mass of the organic acid or a salt thereof acceptable for foods) is 1:0.000025 to 0.25 in the food.

6. The agent according to any one of claims 1 to 5, wherein mass ratio of adenylic acid or a salt thereof acceptable for foods and the organic acid or a salt thereof acceptable for foods (mass of adenylic acid or a salt thereof acceptable for foods:mass of the organic acid or a salt thereof acceptable for foods) is 1:0.7 to 1:20.

7. The agent according to any one of claims 1 to 6, wherein the organic acid or a salt thereof acceptable for foods is succinic acid or a salt thereof acceptable for foods.

8. The agent according to any one of claims 1 to 7, wherein at least one of adenylic acid and the organic acid is contained as a yeast extract.

9. The agent according to any one of claims 1 to 8, which is for use in a food containing 0.60 to 0.90% of salt.

10. The agent according to any one of claims 1 to 8, wherein the food is a food in the form of liquid.
